# EUROPEAN PATENT SPECIFICATION

(11) **EP 2 051 557 B1**
(45) Date of publication and mention of the grant of the patent: **12.05.2010**
(21) Application number: 09151038.8
(22) Date of filing: 05.09.2006
(51) Int. Cl.: H04W 68/02

(54) **Apparatus and method for optimising page transmission by removing redundant page values in a radio communication system**
Vorrichtung und zugehöriges Verfahren zum Konfigurieren einer Seitenmeldung, die zum Aufrufen eines Zugangsendgeräts in einem Funkkommunikationssystem gemäß einem Schema zum teilweisen Identitätsvergleich
Appareil et procédé associé pour configurer un message de radiomessagerie utilisé pour communiquer par radiomessagerie avec un terminal d'accès dans un système de radiocommunication selon un schéma de comparaison d'identité partielle

(43) Date of publication of application: 22.04.2009
(62) Divisional of application: 06120157.0
(73) Proprietor: Research In Motion Limited, Waterloo, Ontario N2L 3W8 (CA)
(72) Inventor: Willey, William Daniel, San Francisco, CA 94109 (US)
(74) Representative: Hibbert, Juliet Jane Grace

(56) References cited:
- EP-A- 1 696 593
- WO-A-03/024146

## Description

The present invention relates generally to a manner by which to page an access terminal of a radio communication system to alert the access terminal of a pending call, or other communication. More particularly, the present invention relates to apparatus, and an associated method, by which to form a quick page message that is selectably free of redundant values.

When quick paging is performed using a partial identity comparison, the pages included in the quick page message are of configurations and lengths best to minimize the occurrence of false wakeup of an access terminal to which the message is broadcast. Excessive battery depletion as a result of false wakeup of the access terminal is avoided.

### Background of the Invention

Advancements in communication technologies have permitted the development and deployment of new types of communication systems and communication services. Cellular telephony, and associated communication services available therethrough, are popularly utilized by many, typically providing users with communication mobility and also provides the capability of communications when the use of wireline communication systems would not be practical or possible.

While early-generation, cellular communication systems provided primarily for voice communications and only limited data communication services, newer-generation systems increasingly provide for high-speed data communication services at variable data communication rates. A CDMA2000, cellular communication system that provides for EV-DO services is an exemplary type of new-generation, cellular communication system that provides for high-speed data services. Operational details and protocols defining communications and operational requirements of devices of the system are set forth in an operating standard specification. Various aspects of operation of the CDMA2000 EV-DO communication scheme remain to be standardized and certain parts of the existing standard specification are considered for amendment. Various successor-generation communication schemes are also undergoing standardization and yet others are envisioned to be standardized.

For instance, a revision to the standard specification, release B of the CDMA2000 EV-DO specification standard that defines a quick paging channel (QPCH) available upon which to broadcast access-terminal pages by an access network (AN) to an access terminal (AT). The QPCH was adopted in industry contributions 3GPP2 C20-20060323-013R1 and 3GPP2 C20-20060323-003R1 and published in 3GPP2 document C.S0024-B V1.0. Generally, pages are broadcast by the access network to an access terminal to alert the access terminal of a pending communication. And by so alerting the access terminal, the access terminal performs actions to permit the effectuation of the communication. Page indications broadcast upon the quick paging channel are broadcast in a manner that facilitates reduced battery consumption of the access terminal by reducing the battery consumption of the battery of the access terminal. Increased battery longevity is provided, reducing the rate at which a battery of the access terminal must be recharged. The access terminal is, as a result, able to be operated for a greater period of time between rechargings or battery replacement. The aforementioned promulgations provide for broadcast of a message including page indications upon a physical logical layer that is monitored by the access terminal. The access terminal monitors the QPCH prior to monitoring the control channel to receive regular, control channel MAC (medium access control) messages such as page messages. A quick page message is broadcast upon the QPCH.

In one configuration, the quick page message contains quick page indicators. The quick page message includes a number of quick page indicator slots populated with the quick page indicators that indicate whether an access terminal is being paged. An exemplary configuration of a scheme that utilizes page indications is set forth, for instance, in industry contribution 3GPP2 C20-20060731-033. In this configuration, during operation, a mobile station hashes to a quick page indicator location, i.e., slot, within the quick page message based upon a session seed, a 32-bit pseudorandom number. If the quick page indicator of the quick page indicator slot to which the access terminal hashes indicates that the access terminal is not being paged, the access terminal enters into a sleep state, a reduced-power state, in which the access terminal does not remain powered at a level to receive the regular control channel MAC messages. Power savings is particularly significant in the event that the control channel MAC messages are lengthy and span multiple control channel frames or capsules.

In another configuration, a partial hash comparison scheme is provided In the disclosed partial hash comparison scheme, the access network forms a quick page message in which a portion of a hash of an access terminal identifier (ATI) of an access terminal that is paged is placed in the quick page message. An access terminal that monitors for the delivery of a quick page message, reads the content of the message and compares the values with corresponding values, that is, portions of a hash of the identifier of that access terminal. If the values do not match, then the access terminal enters into a reduced power state, e.g., a sleep state.

Patent document EP-A-1696593 and WO 03/024146A disclose communication schemes that include use of paging messages. Additionally, the QPCH message, as presently-proposed in, e.g., in the EV-DO Release B signaling QPCH, provides thirty-five page indication locations, i.e., bits available to be populated with paging indicators, The aforementioned "partial hash comparison" scheme utilizes three of the thirty-five page indication locations for identifying the number of pages, and the remaining page indication locations are available for paging, viz., are available. While the proposed, partial hash comparison scheme reduces the false wakeup probability when paging load is relatively low, when the paging load increases, the reduction in the available page indication locations actually increases the possibility of false wakeup. When more than five access terminals are paged, partial hash comparison is not used due to this increased possibility. Instead, hashing to page indication locations is performed.

If a manner could be provided by which to improve the performance of a scheme that utilizes partial comparison pursuant to paging by better reducing the possibility of false wakeup, improved battery longevity of the access terminal would be possible.

It is in light of this background information related to paging by an access network of an access terminal that the significant improvements of the present invention have evolved.

### Brief Description of the Drawing

Figure 1 illustrates a functional block diagram of a radio communication system in which an embodiment of the present invention is operable.

Figure 2 illustrates a process diagram representative of the process of operation of an embodiment of the present invention.

Figure 3 illustrates a method flow diagram listing the method of operation of an embodiment of the present invention.

### Detailed Description

The present invention, accordingly, advantageously provides apparatus, and an associated method, by which to page an access terminal of a radio communication system to alert the access terminal of a pending call, or other communication.

Through operation of an embodiment of the present invention, a manner is provided by which to form a quick page message that is selectably free of redundant values.

Improved quick paging is provided that lessens the likelihood of false wakeup of an access terminal, thereby improving the longevity of the battery that powers the access terminal. Pursuant to operation, when quick paging is performed using a partial identity comparison, the pages included in the quick page message are of configurations and lengths best to minimize the occurrence of false wakeup of the access terminal.

In another aspect of the present invention, a partial identity scheme is utilized in the quick paging procedure. The partial identity comparison utilizes parts of access terminal identifiers (ATIs) or other numbers that are associated with access terminals that are paged. The portion of the ATI, or other number, that is included in the quick page message comprises, for instance, a selected number of most significant bits of the number. The length of the portion of the number included in the quick page message is dependent upon one or more factors.

As the length of the quick page message is prescribed, e.g., is of a thirty-five bit length, the lengths of the parts of the ATIs or other numbers included in the quick page message are limited by this prescribed length. If multiple pages are contained in the quick page message, only fractional portions of the parts of the ATIs or other numbers are able to be included in the quick page message. When the number of pages increase, the size, i.e., lengths, of the parts of the numbers that are includable in the quick page message are reduced.

A first portion of the quick page message, such as a first, three-bit portion, identifies the number of pages in the message. If the quick page message is of a length of thirty-five bits, and, e.g., the number of page indications is three-bits in length, then the number of bits available to identify the access terminals is reduced to thirty-two of the thirty-five bits. When a single access terminal is paged, all thirty-two bits are available by which to identify the paged access terminal. When two access terminals are paged, half of the thirty-two available bits are available to identify each of the two access terminals being paged. Analogously, when three access terminals are paged, one-third of the thirty-two bits are available to identify each of the three access terminals being paged. Because three does not divide into thirty-two equally, the number of bits available to identify different ones of the three access terminals is dissimilar. Or, one or more bits are not utilized to identify the paged access terminals. Analogous divisions and distributions are provided for higher numbers of paged access terminals.

In another aspect of the present invention, a determination is first made of the number of pages that are to be included in the quick page message. And, the corresponding parts of ATIs or other numbers that are used to identify the paged access terminals are configured. The most significant bits, for instance, of the number known to both the access terminal and the access network are used. For example, parts of the ATIs are utilized. For example, if sixteen bits are available to identify an access terminal, such as when the quick page message is to page two access terminals, the sixteen most significant bits of the number are utilized. If preferred, least significant bits are instead utilized. A comparator compares the values that identify the access terminals. In the event that the values identifying the different access terminals that are to be paged correspond, then redundant values are deleted by a redundant page value remover. The bits that would otherwise need to be provided for population with the redundant values are able, instead, to be utilized for other purposes. For instance, in the event that seven access terminals are to be paged and two of the seven access terminals are identified with ATIs that have most significant bits of the same values, the redundant values need not be included in the quick page message but, instead, the five unique sets of values are included in the quick page message.

In a further aspect of the present invention, all of the bit locations of the quick page message available to identify access terminals are used. The number of bits available to identify each access terminal need not be equal. For instance, if three access terminals are to be paged in the quick page message, two of the terminals are identified with ten bit values while a third of the access terminal is identified with an eleven bit-length value. Through use of all of the available parts of the quick page message, false wakeup of an access terminal is proportionately less likely to occur.

In these and other aspects, therefore, apparatus, and an associated method, is provided for an access network of a communication network that generates a first page message on a first paging channel. The first page message is comprised of a first number binary digits and which can be used to page wireless access terminals within the access network. Each access terminal is identified by a plurality of binary digits that form a page identifier set. A determiner is configured to receive a number of page identifier sets and to determine therefrom a number of page value sets to be fitted into the first page message. The page value sets in the first page message are comprised of portions of the received page identifier sets when two or more access terminals are to be paged in the first page message. The determiner also determines the portion and number of binary digits of each received page identifier set to be used to form each page value set to be included in the first page message. A page value set for a second access terminal that matches a page value set for a first access terminal is considered to be redundant. A redundant page value remover is configured to remove at least one redundant page value set intended to be included in the first page message.

In these and further aspects, apparatus, and an associated method, is provided for an access terminals that monitors a first paging channel for delivery of a first paging message. A number of pages detector is configured to detect how many page value sets are included in the first paging message. A page value detector is configured to detect values of each page value set detected by the number of pages detector to be included in the first paging message. The first paging message is selectably free of page value set redundancies.

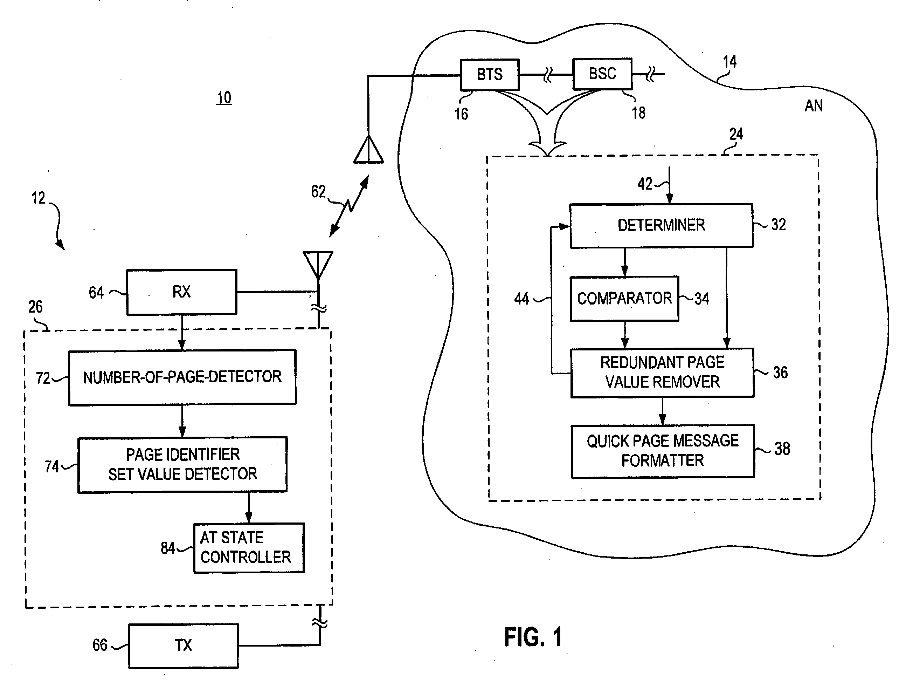

Referring first, therefore, to Figure 1, a radio communication system, shown generally at 10, provides for communications with access terminals, of which the access terminal 12 is exemplary. The communication system forms a multi-user communication system that typically includes a large number of access terminal and a plurality of concurrent communication dialogs. While only a single access terminal is shown in Figure 1, additional access terminals, analogous to the access terminal 12, typically form a portion of the communication system.

Communications are effectuated between an access terminal and a radio network 14, formed of fixed network infrastructure elements, such as a base transceiver station (BTS) 16 and a base station controller (BSC) 18. The access network encompasses a geographical area within which communications with the access network are possible. That is to say, when an access terminal is positioned within the area encompassed by the access network, the access terminal is generally able to communicate with the access network, and the access network is typically able to communicate with the access terminal.

The communication system is operable in general conformity with the operating protocols and parameters of an appropriate communication specification standard. The description set forth herein is exemplary, and the teachings of various embodiments of the present invention are implementable in any of various types of communication systems.

As previously mentioned, access terminals are alerted, by broadcast of a page message when a communication, initiated at the network, is to be terminated at an access terminal. A quick paging channel (QPCH), or analogous channel, is defined. Information contained in a quick page message broadcast on the quick paging channel identifies access terminals that are paged. When an access terminal detects, from the quick page message, that the access terminal is paged, the access terminal further operates in anticipation of the page and subsequent communication. The access terminal, conversely, enters into a reduced-power consumption state, e.g., a sleep state. If the access terminal incorrectly determines that it is being paged, the access terminal falsely wakes up. And, increased levels of power are consumed by the access terminal, resulting in reduced battery longevity. The aforementioned partial hash comparison scheme is intended to reduce the likelihood of false wakeup of the access terminal, but, as presently implemented, provides advantages only when a quick page message pages five or fewer access terminals. Additionally, not all of the bits of a quick page message are fully utilized in every paging scenario, and the existing scheme, for this reason, is less than ideal.

Accordingly, pursuant to an embodiment of the present invention, the access network includes apparatus 24, and the access terminal includes apparatus 26, that operate pursuant to quick page message generation and quick page message receipt in manners that reduce the likelihood of occurrence of false wakeup relative to an existing partial hash comparison scheme. The elements of the apparatus 24 and of the apparatus 26 are functionally represented, implementable in any desired manner, including, for instance, by algorithms executable by processing circuitry.

The elements forming the apparatus 24 are implemented at any appropriate location of the access network, including, as illustrated, at the BTS 16 or BSC 18, or distributed amongst such entities, as well as others.

Here, the apparatus 24 includes a determiner 32, a comparator 34, a redundant page value remover 36, and a quick page message formatter 38.

The determiner 32 operates to determine page values of page identifier sets that are associated with access terminals that are to be paged in a quick page message. That is to say, the determiner is provided, here indicated by way of the lines 42, with the identities, such as by their ATIs, of the access terminals that are to be paged. The number of terminals that are paged is determinative of the lengths of the page identifier sets that are includable in the quick page message. When more pages are to be included in the page message, the lengths of the page identifier sets that identify each of the access terminals being paged are less than the lengths permitted when fewer numbers of access terminals are being paged. Most significant bits of the ATIs are used. And, the determiner determines the parts of the ATIs that can be used, depending upon the number of pages to be included in the quick page message. If two pages are to be included in the quick page message, each page identifier set is of sixteen-bit lengths, the sixteen most significant bits of the ATIs. When numbers other than ATIs are used, analogous portions of such other numbers are, e.g., instead utilized. In the exemplary implementation in which thirty-two bits are available in which to identify the access terminals and three bits are used to identify the number of pages in the quick page message, the thirty-two bits are collectively available by which to be used to identify access terminals that are to be paged. Pursuant to a further embodiment of the present invention, in the event that the number of access terminals that are to be paged do not permit for an equal division of the thirty-two bits, unequal numbers of bits are allocated to identify different ones of the access terminals while fully utilizing all thirty-two available bits. For instance, when three access terminals are to be paged, one access terminal is identified with an eleven-bit length page identifier set while the other two access terminals are identified with ten-bit length page identifier sets.

Indications of the identifiers determined by the determiner are provided to a comparator 34. The comparator 34 operates to compare the different values and to identify if any of the page identifier sets are of identical values. When parts of the ATIs are utilized, that is to say, the selected number of most significant bits of the ATIs of the access terminals that are to be paged are used, there is a possibility that the most significant bits identifying more than one access terminal are identical to the corresponding values that identify another access terminal. Operation of the comparator identifies such identical values.

Indications of comparisons made by the comparator are provided to the redundant page value remover 36. The redundant page value remover removes values, that is to say, page identifier set bits, that are redundant, freeing up bit space in the quick page message. In the exemplary implementation, upon removal of the redundant bit values, the determiner is caused to redetermine the page values of the identifiers of the access terminals that are to be paged. Here, indication is provided to the determiner by way of the line 44 of the removal of the redundant bit values and the need to redetermine the identifiers used to identify the paged access terminals. Upon removal of the redundant page values, increased bits are available to identify the access terminals that are paged or, the partial identity comparison scheme is able to be used when greater than five access terminals are to be paged. Redetermined values are provided by the determiner to the redundant page value remover and thereafter provided to the quick page message formatter 38. The quick page message formatter forms the quick page message populated with page identifier sets that are selectably free of redundancies through the removal of the redundant page value remover, comparator 34, and determiner 32.

Transceiver elements of the base transceiver station 16 cause broadcast of quick page messages that have been formatted by the quick page message formatter. The messages are broadcast upon a radio air interface, represented in Figure 1 by the arrow 62. The messages are delivered to access terminals, such as the access terminal 12, within reception range of the broadcast messages. The access terminal 12 includes transceiver circuitry, here represented by a receive part 64 and a transmit part 66. The receive part 64 operates to receive signals sent thereto, such as the quick page messages broadcast by the access network. And, certain of the detected signals are provided to the apparatus 26 embodied at the access terminal. Of significance here are detections of the quick page message broadcast by the access network.

The apparatus 26 includes a number of page detector 72 and a page identifier set value detector 74. The elements are functionally represented, also implementable in any desired manner, including algorithms executable by processing circuitry. The detector 72 detects an indication in the quick page message of the number of pages that are included in the received quick page message. The number of pages are indicated in, e.g., and as noted above, a three-bit segment of the quick page message. Detection of such indication is used by the page identifier set value detector in the detection of the page identifier sets, thereby to determine whether the access terminal is paged. Additional operation at the access terminal determines, in response to the number of pages detected by the page detector of the page value lengths of the page identifier set or sets contained in the quick page message. In the event that the detector detects the access terminal not to be paged, an indication is provided to an access terminal (AT) state controller 84 to cause the access terminal to be placed in a reduced-power state, e.g., a sleep mode. If a page is detected, conversely, an indication is provided to the state controller and the controller causes the state of the access terminal to permit its further operation with respect to paging and further communication.

While the existing partial hash comparison scheme is used only when five or fewer access terminals are paged, operation of an embodiment of the present invention is potentially permitting of performance of a partial identity comparison scheme in the event that more than five access terminals are being paged, but one or more of the identifiers, that is, page identifier sets are identical. For example, if seven access terminals are being paged and three of the access terminals being paged have the same six bits as their most significant bits, the apparatus 24 operates to eliminate two of the three duplicates page identifier sets and is then able to include five six-bit page identifier sets, herein also referred to as hashes, using partial identity comparison. Otherwise, individual page indication bits are inserted in specified locations of the message, their locations being selected through operation of a hash function generator.

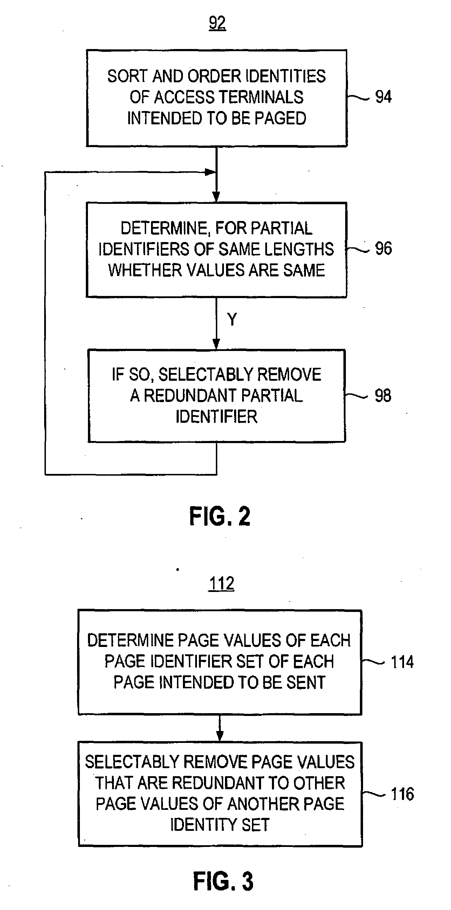

Figure 2 illustrates a diagram, shown generally at 92, representative of a procedure performed at the apparatus 26, or otherwise at the access network, by which to eliminate duplicate values from a quick page message. First, and as indicated by the block 94, the identities are sorted and ordered with the process first commencing with identities having the largest lengths, that is to say, largest number of bits. Then, and as indicated by the decision block 96, a determination is made as to whether the identities of that number of bits, that is length, are of the same values. If so, the yes branch is taken and, as indicated by the block 98, a redundant identity value is removed. The process continues for so long as there are enough partial identities of the size to hold the remaining identities. If the number of partial identities at this size is the same as the number of identities that remain, the partial identities are filled into a message, and the process ends.

If the current number of bits of the partial identity is equal to the smallest number possible, then the partial identity comparison scheme is not utilized. Instead, paging indicator is instead utilized. As noted above, pursuant to exemplary operation, all bits of the quick page message are used even if unequal bit number allocations are made for paging different access terminals within a single page message. By doing so, the false wakeup probability is reduced. Additionally, partial bits of random or pseudorandom numbers known to both the access network and the access terminal are used for the reason that such values are sometimes more random than a hash value generated by a hash function. And, further, partial address bits are used for this reason rather than for partial hash bits.

Figure 3 illustrates a method flow diagram, shown generally at 112, representative of the method of operation of an embodiment of the present invention. The method facilitates paging by an access network that selectably generates a first page message on a first paging channel.

First, and as indicated by the block 114, page values of each page identifier set of each page intended to be included in the first page message is determined. Then, and as indicated by the block 116, page values intended to be included in the first page message are selectably removed. The page values selected to be removed are those that are redundant to page values of another page identity set.

Thus there has been described apparatus for an access network of a communication network that generates a first page message on a first paging channel, said apparatus comprising: a determiner configured to determine page values of each page identifier set of each page intended to be included in the first page message; and a redundant page value remover configured selectably to remove page values intended to be included in the first page message that are redundant to page values of another page identifier set, if any, also intended to be part of the first page message so that the first page message is formed of page value sets selectably free of page value set redundancies.

The apparatus may further comprise a comparator configured to compare the page values of each page identifier set intended to be included in the first page message and wherein the page values selectably removed by said redundant page value remover are removed responsive to comparisons made by said comparator.

Each page identifier set may comprises a selected number of most significant bits of an identifier associated with a corresponding page. The selected number of most significant bits of each page identifier set may be responsive to how many pages are intended to be included in the first paging message.

The apparatus may further comprise a selector configured to select page identifier set lengths that are determinative, in part, of the page values determined by said determiner. In one embodiment, the first paging message is of a prescribed length and wherein the page identifier set lengths selected by said selector are dependent upon both the prescribed length of the first paging message, and a number of page identifier sets included in the first paging message. The first paging message may include a page identity part, each page identifier set of the first paging message being inserted in the page identity part. Selection made by said selector of the page identifier set lengths may comprise selection to fill the page identity part. The first page message may comprise a plurality of pages identified by a corresponding, plurality of page identifier sets, at least one page identifier set of a page identifier set length different than another page identifier set.

The page values of each page identifier set may comprises parts of page-recipient identifiers that are defined in the access network.

There has also been described a method for facilitating paging by an access network that selectably generates a first page message on a first paging channel, said method comprising the operations of: determining page values of each page identifier set of each page intended to be included in the first page message; and selectably removing page values intended to be included in the first page message that are redundant to page values of another page identifier set, if any, also intended to be part of the first page message so that the first page message is formed of page value sets free of page value set redundancies.

The method may further comprise the operation of comparing the page values of each page identifier set intended to be included in the first page message and wherein the page values selectably removed during said operation of selectably removing are removed responsive to comparisons made during said operation of comparing.

Each page identifier set may comprise a selected number of most significant bits of an identifier associated with a corresponding page. The selected number of most significant bits of each page identifier set may be responsive to how many pages are intended to be included in the first paging message. The method may further comprise the operation of selecting page identifier set lengths that are determinative, in part, of the page values determined during said operation of determining. The first paging message may be of a prescribed length and wherein the page identifier set lengths set during said operation of selecting is dependent upon both the prescribed length of the first paging message and a number of page identifier sets included in the first paging message. The first paging message may include a page identity part, each page identifier set of the first paging message being inserted in the page identity part.

The method may further comprise the operations of: broadcasting the first paging message to an access terminal; and deciding at the access terminal whether the access terminal is paged.

The operation of selectably removing may comprise iteratively removing redundant page values until the page identifier sets are collectively of a desired length.

There has also been described apparatus for an access terminal that monitors a first paging channel for delivery of a first paging message, said apparatus comprising: a number of page detector configured to detect how many page identifier sets are included in the first paging message; and a page identifier set value detector configured to detect values of each page identifier set detected by said number of page detector to be included in the first paging message, the first paging message selectably free of page value set redundancies.

There has also bee described a method for an access terminal that monitors a first paging channel for delivery of a first paging message, said method comprising the operations of: detecting how many page identifier sets are included in the first paging message; and detecting values of each page identifier set included in the first paging message, the first paging message selectably free of page value set redundancies.

The previous descriptions are of preferred examples for implementing the invention, and the scope of the invention should not necessarily be limited by this description. The scope of the present invention is defined by the following claims.

## Claims

1. Apparatus (24) for an access network (14) of a communication network (10) that generates a first page message on a first paging channel, said first page message being of a prescribed length and useable to page wireless access terminals (12) within the access network (14), each access terminal (12) being identified by a page identifier set, said apparatus **characterized by**:
a determiner (32) configured to receive a number of page identifier sets and to determine there from a number of page value sets to be fitted into the first page message, page value sets in the first page message being comprised of portions of the received page identifier sets when two or more access terminals (12) are to be paged in the first page message, the determiner (32) being additionally configured to determine the portion of each received page identifier set to be used to form each page value set to be included in the first page message, a page value set for a second access terminal (12) that matches a page value set for a first access terminal (12) being considered redundant; and
a redundant page value remover (36) configured to remove at least one redundant page value set intended to be included in the first page message.

2. The apparatus of claim 1 further comprising a comparator (34) configured to compare each page value set intended to be included in the first page message and wherein the page value set removed by said redundant page value remover (34) is removed responsive to comparisons made by said comparator (34).

3. The apparatus of claim 1 wherein each page value set comprises a selected number of bits of a page identifier set associated with a corresponding page.

4. The apparatus of claim 3 wherein the selected number of bits of each page value set is responsive to how many pages are intended to be included in the first paging message.

5. The apparatus of claim 1 further comprising a selector (38) configured to select page value set lengths.

6. The apparatus of claim 5 wherein the first page message is of a prescribed length and wherein the lengths of the page value sets selected by said selector are dependent upon both the prescribed length of the first page message, and the number of page value sets to be included in the first page message.

7. The apparatus of claim 6 wherein the first page message includes a page identity part and wherein each page value set of the first page message is inserted in the page identity part.

8. The apparatus of claim 7 wherein selection made by said selector (38) of the lengths of the page value sets comprises selection to fill the page identity part.

9. The apparatus of claim 8 wherein the first page message comprises a plurality of pages identified by a corresponding plurality of page value sets, a length of at least one page value set being different from the length of another page value set.

10. The apparatus of claim 1 wherein the values of each page identifier set comprise parts of access terminal identifiers or other numbers that are associated with access terminals that are defined in the access network.

11. A method (92) for facilitating paging by an access network (14) that generates a first page message on a first paging channel, said first page message being of a prescribed length and useable to page wireless access terminals (12) within the access network (14), each access terminal (12) being identified by a page identifier set, said method **characterized by** the steps of:
determining (96) a number of page value sets to be fitted into the first page message, the page value sets being comprised of a portion of the page identifier sets associated with the access terminals to be paged, and determining whether a portion of each page identifier set to be used to form each page value set intended to be included in the first page message is the same as another page identifier set; and
removing (98) at least one page value set intended to be included in the first page message that is redundant with respect to another page value set also intended to be part of the first page message.

12. The method of claim 11 further comprising comparing each page value set intended to be included in the first page message and wherein the removed page value sets are removed responsive to comparisons made during comparison.

13. The method of claim 11 wherein each page value set comprises a selected number of bits of a page identifier set associated with a corresponding page.

14. The method of claim 13 wherein the selected number of bits of each page value set is responsive to how many pages are intended to be included in the first page message.

15. The method of claim 11 further comprising selecting page value set lengths that are determinative, in part, of the page values.

16. The method of claim 15 wherein the first page message is of a prescribed length and wherein the lengths of the page value sets are dependent upon both the prescribed length of the first page message and a number of page value sets included in the first page message.

17. The method of claim 16 wherein the first page message includes a page identity part and wherein each page value set of the first page message is inserted in the page identity part.

18. The method of claim 11 further comprising:
broadcasting the first page message to an access terminal; and
deciding at the access terminal whether the access terminal is paged.

19. The method of claim 11 wherein said operation of removing comprises iteratively removing redundant page values until the page value sets are collectively of a desired length that is less than or equal to the first fixed number of binary digits.

20. The method of claim 11 wherein the values of each page identifier set comprise parts of access terminal identifiers or other numbers that are associated with access terminals that are defined in the access network.

21. Apparatus for an access terminal that monitors a first paging channel for delivery of a first page message, said apparatus **characterized by**:
a number of pages detector (72) configured to detect how many page value sets are included in the first page message; and
a page value detector (74) configured to detect values of each page value set detected by said number of pages detector (72) to be included in the first page message, the first page message free of page value sets that are equal to each other.

22. A method for an access terminal that monitors a first paging channel for delivery of a first page message, said method **characterized by** the steps of:
detecting (114) how many page value sets are included in the first page message; and
detecting (116) values of each page value set included in the first page message, the first page message free of page value sets that are equal to each other.

## Patentansprüche

1. Vorrichtung (24) für ein Zugangsnetzwerk (14) eines Kommunikationsnetzwerks (10), das eine erste Page-Nachricht auf einem ersten Paging-Kanal erzeugt, wobei die erste Page-Nachricht eine festgesetzte Länge hat und verwendbar ist, um drahtlose Zugangs-Endgeräte (12) in dem Zugangsnetzwerk (14) zu rufen bzw. zu pagen, wobei jedes Zugangs-Endgerät (12) durch einen Page-Identifizierer-Satz identifiziert wird, wobei die Vorrichtung **gekennzeichnet ist durch**:
einen Bestimmer (32), der konfiguriert ist, eine Anzahl von Page-Identifizierer-Sätzen zu empfangen und daraus eine Anzahl von Page-Wert-Sätzen zu bestimmen, die in die erste Page-Nachricht eingepasst werden, wobei die Page-Wert-Sätze in der ersten Page-Nachricht aus Teilen der empfangenen Page-Identifizierer-Sätze bestehen, wenn zwei oder mehrere Zugangs-Endgeräte (12) in der ersten Page-Nachricht gepaged werden sollen, wobei der Bestimmer (32) zusätzlich konfiguriert ist, den Teil jedes empfangenen Page-Identifizierer-Satzes zu bestimmen, der verwendet werden soll, um jeden Page-Wert-Satz zu bilden, der in der ersten Page-Nachricht aufgenommen werden soll, wobei ein Page-Wert-Satz für ein zweites Zugangs-Endgerät (12), der mit einem Page-Wert-Satz für ein erstes Zugangs-Endgerät (12) übereinstimmt, als redundant betrachtet wird; und
einen "redundanter Page-Wert"-Entferner (36), der konfiguriert ist, zumindest einen redundanten Page-Wert-Satz zu entfernen, der zur Aufnahme in der ersten Page-Nachricht vorgesehen ist.

2. Vorrichtung gemäß Anspruch 1, die weiter einen Vergleicher bzw. Komparator (34) aufweist, der konfiguriert ist, jeden Page-Wert-Satz zu vergleichen, der in der ersten Page-Nachricht aufgenommen werden soll, und wobei der Page-Wert-Satz, der durch den "redundanter Page-Wert"-Entferner (34) entfernt wird, in Reaktion auf durch den Komparator (34) durchgeführte Vergleiche entfernt wird.

3. Vorrichtung gemäß Anspruch 1, wobei jeder Page-Wert-Satz eine ausgewählte Anzahl von Bits eines Page-Identifizierer-Satzes aufweist, der zu einem entsprechenden Page gehört.

4. Vorrichtung gemäß Anspruch 3, wobei die ausgewählte Anzahl von Bits jedes Page-Wert-Satzes abhängig davon ist, wie viele Pages in der ersten Paging-Nachricht aufgenommen werden sollen.

5. Vorrichtung gemäß Anspruch 1, die weiter einen Selektor (38) aufweist, der konfiguriert ist, Längen von Page-Wert-Sätzen auszuwählen.

6. Vorrichtung gemäß Anspruch 5, wobei die erste Page-Nachricht eine vorgeschriebene Länge hat und wobei die Längen der Page-Wert-Sätze, die durch den Selektor ausgewählt werden, abhängig sind von sowohl der vorgeschriebenen Länge der ersten Page-Nachricht als auch der Anzahl von Page-Wert-Sätzen, die in der ersten Page-Nachricht aufgenommen werden sollen.

7. Vorrichtung gemäß Anspruch 6, wobei die erste Page-Nachricht einen Page-Identitäts-Teil umfasst und wobei jeder Page-Wert-Satz der ersten Page-Nachricht in den Page-Identitäts-Teil eingefügt wird.

8. Vorrichtung gemäß Anspruch 7, wobei eine Auswahl der Längen der Page-Wert-Sätze, die durch den Selektor (38) getroffen wird, eine Auswahl aufweist, um den Page-Identitäts-Teil zu füllen.

9. Vorrichtung gemäß Anspruch 8, wobei die erste Page-Nachricht eine Vielzahl von Pages aufweist, die durch eine entsprechende Vielzahl von Page-Wert-Sätzen identifiziert werden, wobei eine Länge von zumindest einem Page-Wert-Satz verschieden ist zu der Länge eines anderen Page-Wert-Satzes.

10. Vorrichtung gemäß Anspruch 1, wobei die Werte jedes Page-Identifizierer-Satzes Teile von Zugangs-Endgerät-Identifizierer oder andere Nummern aufweisen, die zu Zugangs-Endgeräten gehören, die in dem Zugangsnetzwerk definiert sind.

11. Verfahren (92) zur Erleichterung eines Pagens durch ein Zugangsnetzwerk (14), das eine erste Page-Nachricht auf einem ersten Paging-Kanal erzeugt, wobei die erste Page-Nachricht eine festgesetzte Länge hat und verwendbar ist, um drahtlose Zugangs-Endgeräte (12) in dem Zugangsnetzwerk (14) zu rufen bzw. zu pagen, wobei jedes Zugangs-Endgerät (12) durch einen Page-Identifizierer-Satz identifiziert wird, wobei das Verfahren **gekennzeichnet ist durch** die Schritte:
Bestimmen (96) einer Anzahl von Page-Wert-Sätzen, die in die erste Page-Nachricht eingepasst werden, wobei die Page-Wert-Sätze aus einem Teil der Page-Identifizierer-Sätze bestehen, die zu den zu pagenden Zugangs-Endgeräten gehören, und Bestimmen, ob ein Teil jedes Page-Identifizierer-Satzes, der verwendet werden soll, um jeden Page-Wert-Satz zu bilden, der in der ersten Page-Nachricht aufgenommen werden soll, derselbe ist wie ein anderer Page-Identifizierer-Satz; und
Entfernen (98) zumindest eines redundanten Page-Wert-Satzes, der zur Aufnahme in der ersten Page-Nachricht vorgesehen ist, der redundant ist in Bezug auf einen anderen Page-Wert-Satz, der ebenfalls als Teil der ersten Page-Nachricht vorgesehen ist.

12. Verfahren gemäß Anspruch 11, das weiter aufweist ein Vergleichen jedes Page-Wert-Satzes, der in der ersten Page-Nachricht aufgenommen werden soll, und wobei die entfernten Page-Wert-Sätze entfernt werden in Reaktion auf Vergleiche, die während des Vergleichs gemacht werden.

13. Verfahren gemäß Anspruch 11, wobei jeder Page-Wert-Satz eine ausgewählte Anzahl von Bits eines Page-Identifizierer-Satzes aufweist, der zu einem entsprechenden Page gehört.

14. Verfahren gemäß Anspruch 13, wobei die ausgewählte Anzahl von Bits jedes Page-Wert-Satzes abhängig davon ist, wie viele Pages in der ersten Paging-Nachricht aufgenommen werden sollen.

15. Verfahren gemäß Anspruch 11, das weiter aufweist ein Auswählen von Längen von Page-Wert-Sätzen, die für die Page-Werte teilweise bestimmend sind.

16. Verfahren gemäß Anspruch 15, wobei die erste Page-Nachricht eine vorgeschriebene Länge hat und wobei die Längen der Page-Wert-Sätze abhängig sind von sowohl der vorgeschriebenen Länge der ersten Page-Nachricht als auch einer Anzahl von Page-Wert-Sätzen, die in der ersten Page-Nachricht enthalten sind.

17. Verfahren gemäß Anspruch 16, wobei die erste Page-Nachricht einen Page-Identitäts-Teil umfasst und wobei jeder Page-Wert-Satz der ersten Page-Nachricht in den Page-Identitäts-Teil eingefügt wird.

18. Verfahren gemäß Anspruch 11, das weiter aufweist:
Broadcasten der ersten Page-Nachricht an ein Zugangs-Endgerät; und
Entscheiden an dem Zugangs-Endgerät, ob das Zugangs-Endgerät gepaged wird.

19. Verfahren gemäß Anspruch 11, wobei die Operation eines Entfernens aufweist ein iteratives Entfernen von redundanten Page-Werten, bis die Page-Wert-Sätze zusammen eine gewünschte Länge haben, die kleiner oder gleich zu der ersten festen Anzahl von Binärstellen ist.

20. Verfahren gemäß Anspruch 11, wobei die Werte jedes Page-Identifizierer-Satzes Teile von Zugangs-Endgerät-Identifizierern oder andere Nummern aufweisen, die zu Zugangs-Endgeräten gehören, die in dem Zugangsnetzwerk definiert sind.

21. Vorrichtung für ein Zugangs-Endgerät, die einen ersten Paging-Kanal hinsichtlich einer Lieferung einer ersten Page-Nachricht überwacht, wobei die Vorrichtung **gekennzeichnet ist durch**:
eine Anzahl von Page-Detektoren (72), die konfiguriert sind, zu erfassen, wie viele Page-Wert-Sätze in der ersten Page-Nachricht enthalten sind; und
einen Page-Wert-Detektor (74), der konfiguriert ist, Werte jedes Page-Wert-Satzes zu erfassen, der **durch** die Anzahl von Page-Detektoren (72) erfasst wird, zur Aufnahme in der ersten Page-Nachricht, wobei die erste Page-Nachricht frei von Page-Wert-Sätzen ist, die zueinander gleich sind.

22. Verfahren für ein Zugangs-Endgerät, das einen ersten Paging-Kanal hinsichtlich einer Lieferung einer ersten Page-Nachricht überwacht, wobei das Verfahren **gekennzeichnet ist durch** die Schritte:
Erfassen (114), wie viele Page-Wert-Sätze in der ersten Page-Nachricht enthalten sind; und
Erfassen (116) von Werten jedes Page-Wert-Satzes, der in der ersten Page-Nachricht enthalten ist, wobei die erste Page-Nachricht frei von Page-Wert-Sätzen ist, die zueinander gleich sind.

## Revendications

1. Appareil (24) destiné à un réseau d'accès (14) d'un réseau de communication (10) qui produit un premier message de recherche sur un premier canal de recherche, ledit premier message de recherche étant d'une longueur prescrite et pouvant être utilisé pour rechercher des terminaux d'accès sans fil (12) au sein du réseau d'accès (14), chaque terminal d'accès (12) étant identifié par un ensemble d'identificateurs de recherche, ledit appareil étant **caractérisé par** :
un dispositif de détermination (32), configuré pour recevoir un certain nombre d'ensembles d'identificateurs de recherche et pour déterminer à partir de là un certain nombre d'ensembles de valeurs de recherche à placer dans le premier message de recherche, les ensembles de valeurs de recherche dans le premier message de recherche étant constitués de parties des ensembles d'identificateurs de recherche reçus, lorsque deux ou plus de deux terminaux d'accès (12) doivent être recherchés dans le premier message de recherche, le dispositif de détermination (32) étant en outre configuré pour déterminer la partie de chaque ensemble d'identificateurs de recherche reçu à utiliser pour former chaque ensemble de valeurs de recherche à inclure dans le premier message de recherche, un ensemble de valeurs de recherche pour un second terminal d'accès (12) correspondant à un ensemble de valeurs de recherche pour un premier terminal d'accès (12) étant considéré comme redondant ; et
un dispositif de suppression de valeurs de recherche redondantes (36), configuré pour supprimer au moins un ensemble de valeurs de recherche redondant destiné à être inclus dans le premier message de recherche.

2. Appareil selon la revendication 1, comprenant en outre un comparateur (34) configuré pour comparer chaque ensemble de valeurs de recherche destiné à être inclus dans le premier message de recherche, et dans lequel l'ensemble de valeurs de recherche supprimé par ledit dispositif de suppression de valeurs de recherche redondantes (36) est supprimé en réponse à des comparaisons effectuées par ledit comparateur (34).

3. Appareil selon la revendication 1, dans lequel chaque ensemble de valeurs de recherche comprend un nombre sélectionné de bits d'un ensemble d'identificateurs de recherche associé à une recherche correspondante.

4. Appareil selon la revendication 3, dans lequel le nombre sélectionné de bits de chaque ensemble de valeurs de recherche dépend du nombre de recherches destinées à être incluses dans le premier message de recherche.

5. Appareil selon la revendication 1, comprenant en outre un sélecteur (38) configuré pour sélectionner des longueurs d'ensemble de valeurs de recherche.

6. Appareil selon la revendication 5, dans lequel le premier message de recherche est d'une longueur prescrite et dans lequel les longueurs des ensembles de valeurs de recherche sélectionnées par ledit sélecteur dépendent à la fois de la longueur prescrite du premier message de recherche et du nombre d'ensembles de valeurs de recherche à inclure dans le premier message de recherche.

7. Appareil selon la revendication 6, dans lequel le premier message de recherche comprend une partie d'identité de recherche et dans lequel chaque ensemble de valeurs de recherche du premier message de recherche est inclus dans la partie d'identité de recherche.

8. Appareil selon la revendication 7, dans lequel la sélection des longueurs des ensembles de valeurs de recherche effectuée par le sélecteur (38) comprend une sélection faite pour remplir la partie d'identité de recherche.

9. Appareil selon la revendication 8, dans lequel le premier message de recherche comprend une pluralité de recherches identifiées par une pluralité correspondante d'ensembles de valeurs de recherche, une longueur d'au moins un ensemble de valeurs de recherche étant différente de la longueur d'un autre ensemble de valeurs de recherche.

10. Appareil selon la revendication 1, dans lequel les valeurs de chaque ensemble de valeurs de recherche comprennent des parties des identificateurs de terminaux d'accès ou d'autres numéros qui sont associés à des terminaux d'accès qui sont définis dans le réseau d'accès.

11. Procédé (92) destiné à faciliter la recherche par un réseau d'accès (14) qui produit un premier message de recherche sur un premier canal de recherche, ledit premier message de recherche étant d'une longueur prescrite et pouvant être utilisé pour rechercher des terminaux d'accès sans fil (12) au sein du réseau d'accès (14), chaque terminal d'accès (12) étant identifié par un ensemble d'identificateurs de recherche, ledit procédé étant **caractérisé par** les étapes consistant à :
déterminer (96) un certain nombre d'ensembles de valeurs de recherche à placer dans le premier message de recherche, les ensembles de valeurs de recherche étant constitués d'une partie des ensembles d'identificateurs de recherche associés aux terminaux d'accès à rechercher, et déterminer si une partie de chaque ensemble d'identificateurs de recherche reçu à utiliser pour former chaque ensemble de valeurs de recherche destiné à être inclus dans le premier message de recherche est identique à celle d'un autre ensemble de valeurs de recherche ; et
supprimer (98) au moins un ensemble de valeurs de recherche destiné à être inclus dans le premier message de recherche qui est redondant avec un autre ensemble de valeurs de recherche également destiné à faire partie du premier message de recherche.

12. Procédé selon la revendication 11, comprenant en outre l'étape consistant à comparer chaque ensemble de valeurs de recherche destiné à être inclus dans le premier message de recherche et dans lequel les ensembles de valeurs de recherche supprimés sont supprimés en réponse aux comparaisons faites dans l'étape de comparaison.

13. Procédé selon la revendication 11, dans lequel chaque ensemble de valeurs de recherche comprend un nombre sélectionné de bits d'un ensemble d'identificateurs de recherche associé à une recherche correspondante.

14. Procédé selon la revendication 13, dans lequel le nombre sélectionné de bits de chaque ensemble de valeurs de recherche dépend du nombre de recherches destinées à être incluses dans le premier message de recherche.

15. Procédé selon la revendication 11, comprenant en outre l'étape consistant à sélectionner des longueurs d'ensembles de valeurs de recherche qui déterminent en partie des valeurs de recherche.

16. Procédé selon la revendication 15, dans lequel le premier message de recherche est d'une longueur prescrite, et dans lequel les longueurs des ensembles de valeurs de recherche dépendent à la fois de la longueur prescrite du premier message de recherche et d'un nombre d'ensembles de valeurs de recherche inclus dans le premier message de recherche.

17. Procédé selon la revendication 16, dans lequel le premier message de recherche comprend une partie d'identité de recherche, et dans lequel chaque ensemble de valeurs de recherche du premier message de recherche est inclus dans la partie d'identité de recherche.

18. Procédé selon la revendication 11, comprenant en outre les étapes consistant à :
diffuser le premier message de recherche vers un terminal d'accès ; et
décider sur le terminal d'accès si le terminal d'accès est recherché.

19. Procédé selon la revendication 11, dans lequel ladite étape de suppression comprend la suppression itérative de valeurs de recherche redondantes jusqu'à ce que les ensembles de valeurs de recherche soient collectivement d'une longueur voulue inférieure ou égale au premier nombre fixé de chiffres binaires.

20. Procédé selon la revendication 11, dans lequel les valeurs de chaque ensemble d'identificateurs de recherche comprennent des parties des identificateurs de terminaux d'accès ou d'autres numéros qui sont associés à des terminaux d'accès qui sont définis dans le réseau d'accès.

21. Appareil destiné à un terminal d'accès, qui surveille un premier canal de recherche pour y obtenir un premier message de recherche, ledit appareil étant **caractérisé par** :
un détecteur de nombre de recherches (72), configuré pour détecter le nombre d'ensembles de valeurs de recherche qui sont inclus dans le premier message de recherche ; et
un détecteur de valeurs de recherche (74), configuré pour détecter des valeurs de chacun des ensembles de valeurs de recherche détectés par ledit détecteur de nombre de recherches (72) dans le premier message de recherche, le premier message de recherche ne comprenant pas d'ensembles de valeurs de recherche identiques entre eux.

22. Procédé destiné à un terminal d'accès qui surveille un premier canal de recherche pour y obtenir un premier message de recherche, ledit procédé étant **caractérisé en ce qu'**il comprend les étapes consistant à :
détecter (114) le nombre d'ensembles de valeurs de recherche inclus dans le premier message de recherche ; et
détecter (116) les valeurs de chacun des ensembles de valeurs de recherche inclus dans le premier message de recherche, le premier message de recherche ne comprenant pas d'ensembles de valeurs de recherche identiques entre eux.
